# FASCICULE DE BREVET EUROPEEN

(11) **EP 3 073 505 B1**
(45) Date de publication et mention de la délivrance du brevet: **10.06.2020**
(21) Numéro de dépôt: 16162370.7
(22) Date de dépôt: 24.03.2016
(51) Int. Cl.: H01H 33/662, H01H 9/02

(54) **PROCÉDÉ DE RÉALISATION D'UN APPAREILLAGE ÉLECTRIQUE ET APPAREILLAGE ÉLECTRIQUE À ÉTANCHÉITÉ AMÉLIORÉE**
HERSTELLUNGSVERFAHREN EINES ELEKTROGERÄTS, UND ELEKTROGERÄT MIT VERBESSERTER DICHTIGKEIT
METHOD FOR PRODUCING AN ELECTRIC SWITCHGEAR AND ELECTRIC SWITCHGEAR WITH IMPROVED SEAL

(30) Priorité: 27.03.2015 FR 1552631
(43) Date de publication de la demande: 28.09.2016
(73) Titulaire: Schneider Electric Industries SAS, 92500 Rueil-Malmaison (FR)
(72) Inventeur: BERARDENGO, Florent, 38050 Grenoble Cedex 9 (FR); TORTORICI, Jean-François, 38050 Grenoble Cedex 9 (FR)
(74) Mandataire: Brevalex

(56) Documents cités:
- EP-A1- 0 412 479
- WO-A1-00/41199
- WO-A2-2013/187886
- US-A- 4 568 804

## Description

### DOMAINE TECHNIQUE

L'invention concerne un appareillage électrique à basse ou moyenne tension comportant une enveloppe externe réalisée pour parfaire l'étanchéité de son volume intérieur.

L'invention concerne plus particulièrement un appareillage électrique comportant un conducteur qui est recouvert en partie par le matériau de l'enveloppe et dont une partie est en contact avec l'entourage extérieur à l'enveloppe, et comportant des moyens d'étanchéité durables entre le connecteur et l'enveloppe.

### ÉTAT DE LA TECHNIQUE ANTÉRIEURE

Dans un appareillage électrique à basse ou moyenne tension, un composant électrique, tel que par exemple une ampoule à vide ou tout autre dispositif de coupure, ainsi qu'une bielle de transmission mécanique de mouvement réalisée en matériau isolant, sont montés à l'intérieur d'une enveloppe qui est formée pour être étanche, notamment aux polluants extérieures.

L'appareillage comporte des conducteurs permettant le raccordement électrique de l'appareillage à l'installation électrique avec laquelle l'appareillage est destiné à être raccordé.

Chaque conducteur est partiellement recouvert par l'enveloppe, la partie découverte du conducteur permet le raccordement électrique du conducteur à un autre conducteur qui lui est associé.

L'enveloppe comporte une portion qui recouvre une partie du conducteur; des moyens d'étanchéité sont disposés entre cette portion de l'enveloppe et la partie recouverte du conducteur.

Selon un mode de réalisation conventionnel, l'enveloppe est réalisée par moulage de matière plastique, de préférence par injection de matière thermoplastique ou de matière thermodurcissable.

L'étanchéité entre l'enveloppe et le conducteur est généralement mise en œuvre pendant les opérations de moulage, et nécessite l'emploi de pièces et composants supplémentaires, ainsi qu'une main d'œuvre.

Aussi, dans le cas pour lequel l'enveloppe est réalisée en matériau thermodurcissable, un traitement de surface sur le conducteur doit être mis en œuvre avant l'opération de moulage, afin d'améliorer l'adhérence entre le matériau de l'enveloppe et le conducteur.

Ces opérations impliquent par conséquent une augmentation du temps de production de l'appareillage, et aussi une augmentation du cout de fabrication de l'appareillage.

WO 00/41199 décrit un appareillage électrique, ainsi qu'un procédé de fabrication de cet appareillage, selon les préambules des revendications indépendantes.

L'invention a pour but de proposer un appareillage électrique, ainsi qu'un procédé de fabrication de cet appareillage pour lequel l'étanchéité entre le conducteur et l'enveloppe est améliorée et nécessite un nombre d'étapes plus faibles.

### EXPOSÉ DE L'INVENTION

L'invention propose un procédé de réalisation d'un appareillage électrique basse ou moyenne tension comportant un composant électrique, au moins un connecteur électrique raccordé électriquement au composant et une enveloppe délimitant un volume dans lequel le composant est reçu, dans lequel le connecteur comprend un corps qui traverse l'enveloppe, le procédé comportant une étape de mise en place d'un joint à l'intérieur d'une gorge périphérique formée dans la paroi du corps et une étape d'injection d'une matière plastique autour du corps du connecteur et autour du joint,
caractérisé en ce que l'étape d'injection consiste à injecter la matière plastique à une pression provoquant un écrasement élastique du joint à l'intérieur de la gorge.

L'écrasement élastique du joint sous l'action de la pression du matériau constitutif de l'enveloppe permet de garantir une très bonne étanchéité. De plus, le fait que cet écrasement est maintenu à l'issue de la phase d'injection, permet de ne pas mettre en œuvre d'étape spécifique à la réalisation de l'étanchéité entre le conducteur et l'enveloppe.

De préférence, à l'issue de l'étape de mise en place du joint et avant la mise en œuvre de l'étape d'injection, une partie du joint est située en dehors de la gorge.

De préférence, à l'issue de l'étape de mise en place du joint et avant la mise en œuvre de l'étape d'injection, un volume libre est présent entre le joint et la gorge.

L'invention propose aussi un appareillage électrique à basse ou moyenne tension comportant :
- un composant électrique ;
- au moins un connecteur d'axe principal A, qui est raccordé électriquement au composant, et qui comprend un corps dans la face externe duquel une gorge périphérique coaxiale à l'axe principal A est formée;
- une enveloppe extérieure réalisée par injection de matière plastique qui délimite un volume dans lequel le composant est reçu, le corps du connecteur traversant l'enveloppe ;
- un joint qui est disposé à l'intérieur de la gorge périphérique formée dans le connecteur et qui est recouvert par l'enveloppe extérieure,
dans lequel l'enveloppe comporte une partie formant manchon comprenant une face interne qui est en vis-à-vis et en contact avec la paroi externe du corps du connecteur et qui est en contact avec le joint,
cependant la partie formant manchon exerce sur le joint un effort de compression du joint à l'intérieur de la gorge annulaire, et la gorge comporte une partie dont la dimension mesurée selon l'axe principal A du connecteur est inférieure à la plus grande dimension axiale du joint.

De préférence, la gorge comporte une ouverture au niveau de laquelle la gorge débouche dans la paroi externe du corps dont la longueur de l'ouverture, mesurée selon l'axe principal A du connecteur, est inférieure à la plus grande longueur axiale de la section de la gorge.

De préférence, le connecteur comporte, une lèvre située à l'un et/ou l'autre des deux côtés de l'ouverture de la gorge.

De préférence, la section de la gorge périphérique selon un plan axial passant par à l'axe principal A du connecteur a une forme choisie parmi un quadrilatère rectangle, une portion de cercle, un ovale, un trapèze, ou un hexagone

De préférence, le connecteur comporte une face d'extrémité située à l'extérieur de l'enveloppe et le corps du connecteur est constitué de deux parties situées axialement de part et d'autre de la gorge, dont le diamètre de la partie qui est située axialement la plus proche de la face d'extrémité du corps, est de diamètre plus grand que le diamètre de l'autre partie.

La face d'extrémité du connecteur permet de faciliter le raccordement ou la séparation du connecteur avec un conducteur. La forme du corps de l'enveloppe permet en outre de retirer facilement le connecteur hors de la partie formant manchon et ainsi faciliter un recyclage ultérieur des composants de matériaux différents.

De préférence, la section du joint est de forme circulaire ou annulaire ou quadrilobes.

De préférence, la gorge périphérique comporte une face de fond et deux parois latérales qui sont convexes bombées vers l'intérieur de la gorge et le joint annulaire est un joint du type à quatre lobes.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective en demi-coupe d'un appareillage électrique selon l'invention ;
- la figure 2 est un détail à plus grande échelle montrant un conducteur, sa gorge périphérique et un joint destiné à être reçu dans la gorge ;
- les figures 3A à 3H sont des vues montrant différents modes de réalisation de la gorge et du joint, pour la mise en œuvre de l'invention.

### EXPOSÉ DÉTAILLÉ DE MODES DE RÉALISATION PARTICULIERS

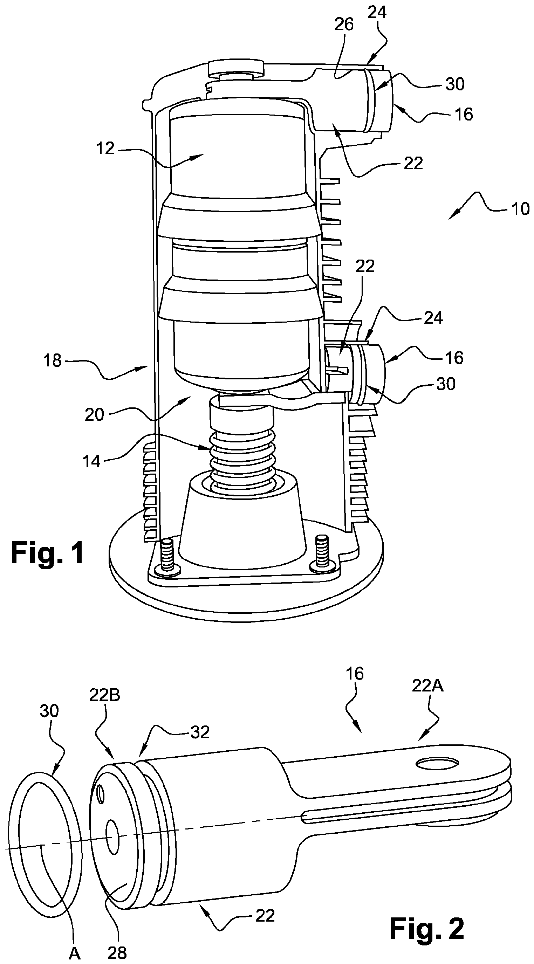

On a représenté à la figure 1 un appareillage électrique à basse ou moyenne tension 10, qui comporte un composant électrique 12, tel que par exemple ici une ampoule à vide, une bielle14 de manœuvre et d'actionnement du composant 12, et deux connecteurs 16 pour le raccordement électrique de chaque pole du composant 12 à un conducteur de la ligne de courant à basse ou moyenne tension sur laquelle l'appareillage 10 est destiné à être monté.

L'appareillage 10 comporte aussi une enveloppe 18 qui délimite un volume 20 dans lequel le composant 12 et la bielle de manœuvre sont reçus.

Le volume intérieur 20 de l'enveloppe 18 est fermé de manière hermétique pour empêcher que des éléments polluants provenant de l'extérieur ne viennent perturber le fonctionnement du composant 12 ou du mécanisme d'actionnement 14.

Comme on peut le voir à la figure 2, chaque connecteur 16 comporte un corps principal 22 s'étendant selon son axe principal A qui est ici horizontal, mais qui peut avoir toute autre orientation.

En outre, ici, le corps 22 est de forme cylindrique de révolution. Il sera compris que l'invention n'est pas limitée à ce mode de réalisation et que la forme du corps peut être différente de celle représentée. Par exemple, le corps 22 peut avoir toute autre forme de révolution ou une section par exemple carrée.

Une première extrémité 22A du corps 22 est conformée pour être raccordée électriquement à un pôle du composant 12 qui lui est associée, l'autre extrémité 22B du corps 22 est conformée pour le raccordement du connecteur 16 à un conducteur de la ligne électrique.

Ici, la deuxième extrémité 22B du corps 22 comporte une face radiale 28 comportant des moyens de liaison mécanique au conducteur associé.

Ainsi, chaque connecteur 16 traverse l'enveloppe 18.

Pour garantir l'herméticité du volume intérieur 20 de l'enveloppe 18, des moyens d'étanchéité sont agencés entre l'enveloppe 18 et le connecteur 16.

L'enveloppe 18 comporte une partie formant manchon 24 qui entoure le corps 22 du connecteur 16. Cette partie formant manchon 24 comporte une face interne 26 qui est située en vis-à-vis de la paroi externe du corps 22 et qui est en contact avec ladite paroi externe du corps 22.

Les moyens d'étanchéité mentionnés ci-dessus comportent un joint 30, qui est ici un joint torique et qui est disposé dans une gorge périphérique 32 qui lui est associée. Cette gorge 32 est formée dans la paroi externe du corps 22 du connecteur 16.

En outre, le joint 30 est comprimé radialement entre la partie formant manchon 24 et le fond de la gorge 32, pour garantir son appui contre la face interne 26 de la partie formant manchon.

L'enveloppe 18 est réalisée en une seule pièce par injection de matière thermoplastique.

De préférence, cette matière thermoplastique est un matériau choisi parmi la liste suivante : Polyéthylène PE, Polyéthylène Haute Densité PE-HD, Polytéréphtalate d'éthylène PET, Polytéréphtalate de butylène PBT, Polypropylène PP, Polysulfure PS, Polyamide PA, Polyamide semi-aromatique PA HT ; Polyphtalamide PPA, Polyarylamide PAA.

Lors de son injection, la matière thermoplastique, à son état plastique ou visqueux, est soumise à une pression élevée pour obtenir les propriétés mécaniques et d'isolation électrique nécessaires à la réalisation de l'enveloppe 18.

Cette pression sur le matériau à son état plastique est en outre utilisée pour provoquer une déformation du joint 30, écrasant celui-ci à l'intérieur de la gorge 32 associée.

Ainsi, à l'issue de l'étape de moulage par injection de l'enveloppe 18, le joint 30 est comprimé à l'intérieur de la gorge 32. Cet écrasement du joint 30 est une déformation élastique de celui-ci, ce qui permet au joint 30 de s'appuyer avec un effort d'appui suffisamment important contre la face interne 26 de la partie formant manchon 24 qui lui est associée.

Le procédé de fabrication de l'appareillage 10 comporte les étapes successives suivantes :
- une étape de mise en place de chaque joint 30 dans la gorge 32 associée du connecteur 16 ;
- une étape de moulage par injection de l'enveloppe 18 autour des connecteurs 16 et des joints 30 associés; et
- une étape d'assemblage des composants de l'appareillage, à savoir notamment l'assemblage et le raccordement du composant 12 et éventuellement de la bielle 14 de manœuvre.

L'étape de moulage par injection de l'enveloppe 18 est mise en œuvre après la mise en place de chaque joint sur le connecteur 16 associé.

Cela permet de faciliter la mise en place du joint car l'accès à la gorge 32 est relativement aisé, contrairement aux modes de fabrication de l'appareillage pour lesquels le joint est mis en place postérieurement à l'étape d'injection de l'enveloppe.

Cela permet aussi à la partie formant manchon 24 de recouvrir les portions de la paroi externe du corps 22 du connecteur 16 qui sont situées de part et d'autre de la gorge 32.

Aussi, les conditions d'injection du matériau thermoplastique, notamment la pression élevée, permettent de garantir un bon contact de la partie formant manchon 24 avec la paroi externe du corps 22 du connecteur 16 par serrage ou par frettage, en conséquence de la pression d'injection et du refroidissement du matériau thermoplastique.

Comme on l'a dit précédemment, le joint 30 est comprimé dans la gorge 32 qui lui est associée après que l'enveloppe a été formée.

La section du joint 30 est ainsi déformée, pour que le joint remplisse quasiment la totalité de la gorge 32.

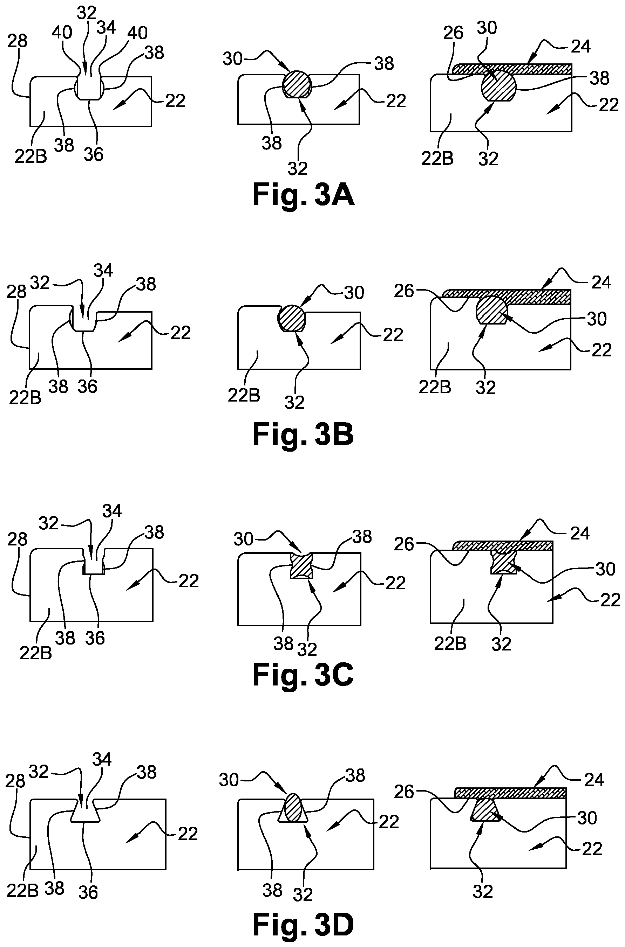

On a représenté aux figures 3A à 3G différentes sections du joint 30 et de la gorge 32 qui lui est associée montrant des exemples de réalisation de l'invention.

La gorge 32 comporte une ouverture 34 au niveau de laquelle la gorge 32 débouche dans la face externe du corps 22, elle comporte aussi une paroi de fond 36 contre laquelle le joint 30 est destiné à venir en appui radialement, et deux parois latérales 38 qui délimitent axialement la gorge 32.

Ici, la paroi de fond 36 est de forme cylindrique. Il sera compris que la paroi de fond 36 peut avoir toute autre forme et notamment toute autre forme de révolution centrée sur l'axe principal A du connecteur 16.

Selon un premier aspect de la gorge 32, celle-ci est formée pour retenir le joint 30 en position dans celle-ci avant et pendant la mise en œuvre de l'étape de moulage par injection de l'enveloppe 18.

De préférence, la gorge 32 comporte une partie dont la dimension mesurée selon l'axe principal A du connecteur 16 est inférieure à la plus grande dimension axiale du joint 30.

Selon un premier mode de réalisation, la partie de la gorge 32 qui est de dimension axiale réduite est située à l'ouverture 34 de la gorge 32. Les bords de l'ouverture 34 de la gorge 32 sont formés par les extrémités libres de lèvres 40 situées aux extrémités radiales externes des parois latérales 38 de la gorge 32. Des exemples de telles lèvres 40 sont représentés aux figures 3A 3E et 3F.

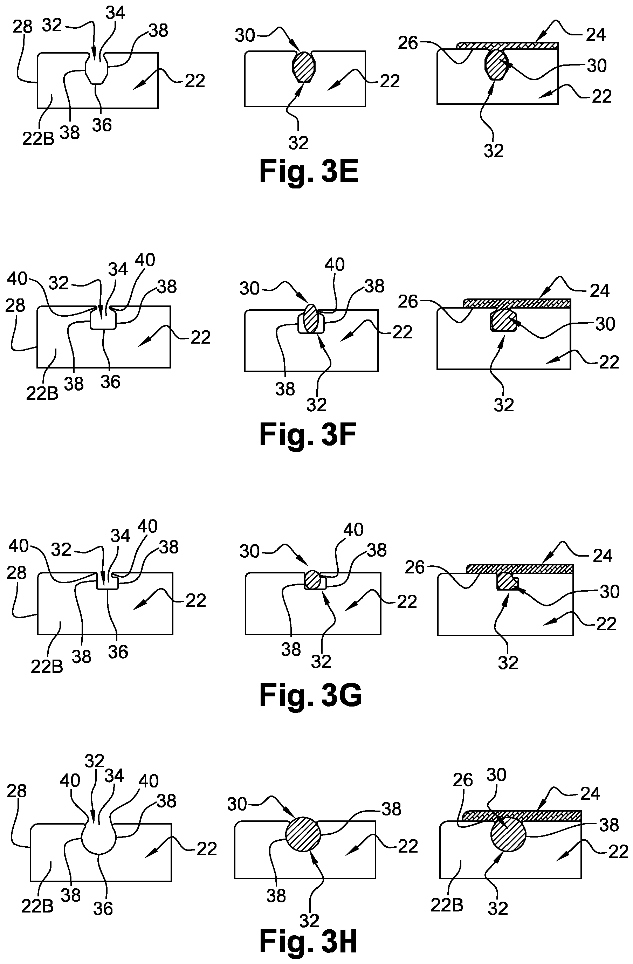

Selon une variante de réalisation, la gorge 32 comporte une seule lèvre 40, comme on peut le voir à la figure 3G.

Selon un autre mode de réalisation représenté à la figure 3C, la partie de la gorge 32 qui est de dimension axiale réduite est une partie médiane de la gorge 32. Selon ce mode de réalisation, chaque paroi latérale 38 de la gorge 32 est de forme convexe et est bombée axialement vers l'intérieur de la gorge 32. Une telle forme de la gorge 32 est particulièrement adaptée à un joint 30 du type dit à quatre lobes, c'est-à-dire un joint 30 présentant une section en forme de quadrilatère à bords concaves.

Chaque lobe du joint 30 est reçu dans un coin de la gorge 32 et les lobes radialement intérieurs, qui s'appuient contre la paroi de fond 36 sont retenus radialement par les parties bombées des parois latérales 38

Différentes sections selon un plan axial passant par l'axe principal A, de la gorge 32 et du joint 30 ont été représentées aux figures 3A à 3H.

Selon les modes représentés aux figures 3A, 3B et 3H, la section de la gorge 32 est de forme principale circulaire, c'est-à-dire que les parois latérales sont concaves ouvertes axialement vers l'intérieur de la gorge 32.

Le mode de réalisation de la figure 3B diffère de celui de la figure 3A en ce que les deux parties de la face externe du corps 22, qui sont situées de part et d'autre de la gorge 32, ont un diamètre différent. De préférence, la partie de plus grand diamètre est celle qui est la plus proche de la deuxième extrémité 22B du corps 22.

Selon le mode de réalisation de la figure 3H, la section de la gorge est en forme d'une portion de cercle interrompue au niveau de l'ouverture 34 de la gorge 32.

Selon le mode de réalisation de la figure 3C, la section de la gorge est telle que décrite précédemment, c'est à dire que chaque paroi latérale 38 de la gorge 32 est de forme convexe et est bombée axialement vers l'intérieur de la gorge 32.

Selon les modes représentés aux figures 3D et 3E, la section de la gorge 32 est en forme de trapèze et d'octogone, respectivement.

Selon les modes représentés aux figures 3D et 3E, la section de la gorge 32 est en forme de quadrilatère et l'extrémité externe d'une paroi latérale 38 (figure 3G ou des deux parois latérales 38 (figure 3F) porte une lèvre 40.

La section du joint 30 est choisie de manière appropriée, elle est par exemple circulaire aux figures 3A, 3B et 3G, elle est ovale aux figures 3D, 3E et 3F et elle est globalement à "quatre lobes" à la figure 3C.

Aussi, selon le mode de réalisation représenté à la figure 3H, la section du joint 30 est circulaire et complémentaire de la section de la gorge 32, de sorte qu'il est reçu sans jeu dans la gorge 32 avant l'opération de moulage par injection de l'enveloppe 18.

Il sera compris que les exemples de section du joint 30 et de la gorge 32 sont donnés à titre d'illustration et que l'invention n'est pas limitée à ces seuls exemples.

Selon un autre aspect des moyens d'étanchéité, lorsque le joint 30 est monté dans la gorge 32, avant l'opération de moulage par injection de l'enveloppe 18, et comme on peut le voir sur le dessin central de chacune des figures 3A à 3G, le joint 30 est reçu avec jeu dans la gorge 32. De plus, une partie du joint 30 est située en dehors de la gorge 32.

Selon une variante de réalisation, lorsque le joint 30 est monté dans la gorge 32, avant l'opération de moulage par injection de l'enveloppe 18, le joint 30 est reçu sans jeu dans la gorge 32.

Cela permet que lors de l'opération de moulage par injection, la pression du matériau injecté produise une déformation élastique du joint 30 le forçant à s'écraser et à pénétrer de manière supplémentaire dans la gorge 32, comme on peut le voir sur le dessin de droite de chaque figure 3A à 3G.

Après l'opération de moulage, le joint 30 aura alors tendance à revenir vers sa forme initiale et puisqu'il en sera empêché par la présence de la partie formant manchon 24, il exercera par conséquent un effort d'appui contre la face interne 26 de la partie formant manchon 24.

Un tel procédé de réalisation de l'appareillage électrique 10 permet de surmouler la matière plastique autour du joint et du connecteur 16 en une seule opération, sans risque que le joint 30 ne se déplace par rapport au connecteur 16.

L'étanchéité entre le connecteur 16 et l'enveloppe 18 s'en trouve ainsi améliorée.

De plus, les formes respectives du joint 30 et de la gorge 32 dans laquelle le joint 30 est introduit permettent de retirer le connecteur 16 hors de l'enveloppe 18 sans risque que de la matière de l'enveloppe 18 ne se casse ou ne reste liée au connecteur 16.

Enfin, ces formes respectives permettent au joint 30 de rester en place sur le conducteur 16 tout au long du procédé de réalisation de l'appareillage 10, notamment lors de l'étape d'injection, mais aussi pendant l'utilisation de l'appareillage 10.

## Revendications

1. Procédé de réalisation d'un appareillage électrique (10) basse ou moyenne tension comportant un composant électrique (12), au moins un connecteur (16) électrique raccordé électriquement au composant (12) et une enveloppe (18) délimitant un volume dans lequel le composant (12) est reçu, dans lequel le connecteur (16) comprend un corps (22) qui traverse l'enveloppe (18),
le procédé comportant une étape de mise en place d'un joint (30) à l'intérieur d'une gorge périphérique (32) formée dans la paroi du corps (22) et
une étape d'injection d'une matière plastique autour du corps (22) du connecteur (16) et autour du joint (30),
**caractérisé en ce que** l'étape d'injection consiste à injecter la matière plastique à une pression provoquant un écrasement élastique du joint (30) à l'intérieur de la gorge (32).

2. Procédé selon la revendication précédente, **caractérisé en ce qu'**à l'issue de l'étape de mise en place du joint (30) et avant la mise en œuvre de l'étape d'injection, une partie du joint (30) est située en dehors de la gorge (32).

3. Procédé selon la revendication précédente, **caractérisé en ce qu'**à l'issue de l'étape de mise en place du joint (30) et avant la mise en œuvre de l'étape d'injection, un volume libre est présent entre le joint (30) et la gorge (32).

4. Appareillage électrique (10) basse ou moyenne tension comportant :
- un composant (12) électrique ;
- au moins un connecteur (16) d'axe principal A, qui est raccordé électriquement au composant (12), et qui comprend un corps (22) dans la face externe duquel une gorge (32) périphérique est formée;
- une enveloppe (18) extérieure réalisée par injection de matière plastique qui délimite un volume (20) dans lequel le composant (12) est reçu, le corps (22) du connecteur 16 traversant l'enveloppe (18) ;
- un joint (30) qui est disposé à l'intérieur de la gorge (32) périphérique formée dans le connecteur (16) et qui est recouvert par l'enveloppe (18) extérieure,
dans lequel l'enveloppe (18) comporte une partie formant manchon (24) comprenant une face interne (26) qui est en vis-à-vis et en contact avec la paroi externe du corps (22) du connecteur (16) et qui est en contact avec le joint (30),
la partie formant manchon (24) exerçant sur le joint (30) un effort de compression du joint (30) à l'intérieur de la gorge (32) annulaire,
**caractérisé en ce que** la gorge (32) comporte une partie (34) dont la dimension mesurée selon l'axe principal (A) du connecteur (16) est inférieure à la plus grande dimension axiale du joint (30).

5. Appareillage électrique (10) selon la revendication précédente, **caractérisé en ce que** la gorge (32) comporte une ouverture (34) au niveau de laquelle la gorge (32) débouche dans la paroi externe du corps (22) dont la longueur de l'ouverture, mesurée selon l'axe principal A du connecteur (16), est inférieure à la plus grande longueur axiale de la section de la gorge (32).

6. Appareillage électrique (10) selon l'une des revendications 4ou 5, **caractérisé en ce que** le connecteur (16) comporte, une lèvre située à l'un et/ou l'autre des deux côtés de l'ouverture (34) de la gorge (32).

7. Appareillage électrique (10) selon la revendication 4, **caractérisé en ce que** la section de la gorge (32) périphérique selon un plan axial passant par l'axe principal A du connecteur (16) a une forme choisie parmi un quadrilatère rectangle, une portion de cercle, un ovale, un trapèze, ou un hexagone.

8. Appareillage électrique (10) selon l'une quelconque des revendications 4 à 7, **caractérisé en ce que** le connecteur (16) comporte une face d'extrémité (28) située à l'extérieur de l'enveloppe (18) et le corps (22) du connecteur (16) est constitué de deux parties situées axialement de part et d'autre de la gorge (32), dont le diamètre de la partie qui est située axialement le plus proche de la face d'extrémité (28) du corps (22), est de diamètre plus grand que le diamètre de l'autre partie.

9. Appareillage électrique (10) selon l'une quelconque des revendications 4 à 8, **caractérisé en ce que** la section du joint (30) est de forme circulaire, annulaire ou quadrilobes.

10. Appareillage électrique (10) selon la revendication 4, **caractérisé en ce que** la gorge (32) périphérique comporte une face de fond (36) et deux parois latérales (38) qui sont convexes bombées vers l'intérieur de la gorge (32) et le joint (30) annulaire est un joint (30) du type à quatre lobes.

## Patentansprüche

1. Verfahren zur Herstellung einer elektrischen Nieder- oder Mittelspannungseinrichtung (10), die eine elektrische Komponente (12), zumindest einen elektrischen Verbinder (16), der elektrisch mit der Komponente (12) verbunden ist, und ein Gehäuse (18) enthält, das einen Raum definiert, in dem die Komponente (12) aufgenommen ist, wobei der Verbinder (16) einen Körper (22) enthält, der durch das Gehäuse (18) hindurchgeht,
wobei das Verfahren einen Schritt des Anordnens einer Dichtung (30) innerhalb einer in der Wand des Körpers (22) ausgebildeten Umfangsnut (32) umfasst, sowie
einen Schritt des Anspritzens eines Kunststoffmaterials um den Körper (22) des Verbinders (16) und um die Dichtung (30) herum,
**dadurch gekennzeichnet, dass**
der Schritt des Anspritzens darin besteht, das Kunststoffmaterial mit einem Druck anzuspritzen, der eine elastische Quetschung der Dichtung (30) im Inneren der Nut (32) bewirkt.

2. Verfahren nach dem vorangehenden Anspruch, **dadurch gekennzeichnet, dass** nach dem Schritt des Anordnens der Dichtung (30) und vor dem Ausführen des Schritts des Anspritzens ein Teil der Dichtung (30) sich außerhalb der Nut (32) befindet.

3. Verfahren nach dem vorangehenden Anspruch, **dadurch gekennzeichnet, dass** nach dem Schritt des Anordnens der Dichtung (30) und vor dem Ausführen des Schritts des Anspritzens ein Freiraum zwischen der Dichtung (30) und der Nut (32) vorhanden ist.

4. Elektrische Nieder- oder Mittelspannungseinrichtung (10), enthaltend:
- eine elektrische Komponente (12);
- zumindest einen Verbinder (16) mit einer Hauptachse A, der elektrisch mit der Komponente (12) verbunden ist und der einen Körper (22) aufweist, in dessen Außenfläche eine Umfangsnut (32) eingebracht ist;
- ein äußeres Gehäuse (18), das durch Spritzen von Kunststoffmaterial hergestellt ist und einen Raum (20) begrenzt, in welchem die Komponente (12) aufgenommen ist, wobei der Körper (22) des Verbinders (16) durch das Gehäuse (18) hindurchgeht;
- eine Dichtung (30), die innerhalb der Umfangsnut (32) angeordnet ist, welche in dem Verbinder (16) ausgebildet ist und von dem äußeren Gehäuse (18) überdeckt wird,
wobei das Gehäuse (18) einen Hülsenabschnitt (24) enthält, der eine Innenfläche (26) aufweist, die der Außenwand des Körpers (22) des Verbinders (16) gegenüberliegt und diese kontaktiert und die mit der Dichtung (30) in Kontakt steht,
wobei der Hülsenabschnitt (24) auf die Dichtung (30) eine Kraft zum Zusammendrücken der Dichtung (30) innerhalb der ringförmigen Nut (32) ausübt,
**dadurch gekennzeichnet, dass**
die Nut (32) einen Abschnitt (34) enthält, dessen Abmessung in der Hauptachse (A) des Verbinders (16) gemessen kleiner als die kleinste axiale Abmessung der Dichtung (30) ist.

5. Elektrische Einrichtung (10) nach dem vorangehenden Anspruch, **dadurch gekennzeichnet, dass** die Nut (32) eine Öffnung (34) aufweist, in deren Bereich die Nut (32) in die Außenwand des Körpers (22) mündet, wobei die Länge der Öffnung in der Hauptachse A des Verbinders (16) gemessen kleiner ist als die größte axiale Länge des Querschnitts der Nut (32).

6. Elektrische Einrichtung (10) nach einem der Ansprüche 4 oder 5, **dadurch gekennzeichnet, dass** der Verbinder (16) eine Lippe aufweist, die sich auf der einen und/oder anderen der beiden Seiten der Öffnung (34) der Nut (32) befindet.

7. Elektrische Einrichtung (10) nach dem Anspruch 4, **dadurch gekennzeichnet, dass** der Querschnitt der Umfangsnut (32) entlang einer axialen Ebene, die durch die Hauptachse A des Verbinders (16) verläuft, eine Form hat, die aus einem rechteckförmigen Viereck, einem Teil eines Kreises, einem Oval, einem Trapez oder einem Sechseck ausgewählt ist.

8. Elektrische Einrichtung (10) nach einem der Ansprüche 4 bis 7, **dadurch gekennzeichnet, dass** der Verbinder (16) eine Endfläche (28) aufweist, die außerhalb des Gehäuses (18) liegt, und der Körper (22) des Verbinders (16) aus zwei Teilen besteht, die sich axial beiderseits der Nut (32) befinden, wobei der Durchmesser des Teils, das sich axial am nächsten an der Endfläche (28) des Körpers (22) befindet, im Durchmesser größer als der Durchmesser des anderen Teils ist.

9. Elektrische Einrichtung (10) nach einem der Ansprüche 4 bis 8, **dadurch gekennzeichnet, dass** der Querschnitt der Dichtung (30) kreisförmig, ringförmig oder vierlappig ist.

10. Elektrische Einrichtung (10) nach Anspruch 4, **dadurch gekennzeichnet, dass** die Umfangsnut (32) eine Bodenfläche (36) und zwei Seitenwände (38) aufweist, die zum Inneren der Nut (32) hin konvex gekrümmt sind, und die ringförmige Dichtung (30) ist eine Vier-Lappen-Dichtung (30) ist.

## Claims

1. Method for producing a low or medium voltage switchgear (10) comprising an electrical component (12), at least one electrical connector (16) electrically connected to the component (12) and a casing (18) delimiting a volume in which the component (12) is received, wherein the connector (16) comprises a body (22) which passes through the casing (18),
the method comprising a step of placing a seal (30) inside a peripheral groove (32) formed in the wall of the body (22) and
a step of injecting a plastic material around the body (22) of the connector (16) and around the seal (30),
**characterized in that** the injection step consists in injecting the plastic material at a pressure causing an elastic crushing of the seal (30) inside the groove (32).

2. Method according to the preceding claim, **characterized in that** at the end of the step of fitting the seal (30) and before the implementation of the injection step, part of the seal (30) is located outside the groove (32).

3. Method according to the preceding claim, **characterized in that** at the end of the step of fitting the seal (30) and before the implementation of the injection step, a gap is present between the seal (30) and the groove (32).

4. Low or medium voltage switchgear (10) comprising:
- an electrical component (12);
- at least one connector (16) with a main axis A, which is electrically connected to the component (12), and which comprises a body (22) in the external face of which a peripheral groove (32) is formed;
- an outer casing (18) produced by injection of plastic material which delimits a volume (20) in which the component (12) is received, the body (22) of the connector (16) passing through the casing (18);
- a seal (30) which is disposed inside the peripheral groove (32) formed in the connector (16) and which is covered by the outer casing (18),
wherein the casing (18) has a sleeve portion (24) comprising an internal face (26) which is opposite and in contact with the external wall of the body (22) of the connector (16) and which is in contact with the seal (30),
the sleeve part (24) exerting on the seal (30) force on the seal (30) compressing the seal (30) inside the annular groove (32),
**characterized in that** the groove (32) has a part (34) whose dimension measured along the main axis (A) of the connector (16) is less than the largest axial dimension of the seal (30).

5. Switchgear (10) according to the preceding claim, **characterized in that** the groove (32) has an opening (34) at which the groove (32) opens into the external wall of the body (22) the length of which opening, measured along the main axis A of the connector (16), is less than the greatest axial length of the section of the groove (32).

6. Switchgear (10) according to one of claims 4 or 5, **characterized in that** the connector (16) comprises a lip located at one and / or the other on both sides of the opening (34) of the groove (32).

7. Switchgear (10) according to claim 4, **characterized in that** the section of the peripheral groove (32) along an axial plane passing through the main axis A of the connector (16) has a shape chosen from a rectangular quadrilateral, a portion of a circle, an oval, a trapezoid, or a hexagon.

8. Switchgear (10) according to any one of Claims 4 to 7, **characterized in that** the connector (16) has an end face (28) situated outside the casing (18) and the body (22) of the connector (16) consists of two parts located axially on either side of the groove (32), the diameter of the part which is located axially closest to the end face (28) of the body (22), is of larger diameter than the diameter of the other part.

9. Switchgear (10) according to any one of claims 4 to 8, **characterized in that** the section of the seal (30) is of circular, annular or Quad-rings shape.

10. Switchgear (10) according to claim 4, **characterized in that** the peripheral groove (32) has a bottom face (36) and two side walls (38) which are convex curved inwards of the groove (32) and the annular seal (30) is a seal (30) of the four-lobe type.
